# EUROPEAN PATENT SPECIFICATION

(11) **EP 2 410 368 B1**
(45) Date of publication and mention of the grant of the patent: **18.10.2017**
(21) Application number: 11174643.4
(22) Date of filing: 20.07.2011
(51) Int. Cl.: G01J 3/46, G01J 1/04, C22C 5/06, C22C 5/08, G02B 5/28, G02B 26/00

(54) **Interference filter, optical module, and analyzing device**
Interferenzfilter, optisches Modul und Analysevorrichtung
Filtre d'interférences, module optique et dispositif d'analyse

(30) Priority: 23.07.2010 JP 2010165587
(43) Date of publication of application: 25.01.2012
(60) Divisional application: 13158748.7
(73) Proprietor: Seiko Epson Corporation, Shinjuku-ku Tokyo (JP)
(72) Inventor: Shinto, Susumu, Nagano, 392-8502 (JP); Kitahara, Koji, Nagano, 392-8502 (JP)
(74) Representative: Hoffmann Eitle

(56) References cited:
- EP-A1- 1 612 784
- EP-A1- 2 048 664
- EP-A2- 1 746 591
- JP-A- 2009 251 105
- US-A1- 2003 180 177
- US-A1- 2004 028 912
- US-A1- 2004 263 984
- US-A1- 2006 134 367
- US-A1- 2006 182 991
- US-A1- 2010 142 067

## Description

### BACKGROUND

### 1. Technical Field

The present invention relates to an interference filter, an optical module provided with the interference filter, and an analyzing device provided with the optical module.

### 2. Related Art

Known interference filters include a configuration wherein reflecting film mirrors are disposed face to face on the opposing surfaces of a pair of substrates. Such interference filters include a pair of substrates held parallel to each other, and a pair of mirrors (reflecting films) formed face to face on these substrates with a gap formed therebetween.

In this type of interference filter, light is reflected between the pair of mirrors and only light having a specific wavelength is allowed to pass therethrough, while light having other wavelengths is cancelled by interference.

Dielectric films or metal films are typically used for the mirrors. The functions required of the mirrors are high reflection characteristics and transmittance. Considering these functions, silver (Ag) appeared to be a promising candidate for the metal film.

However, films made from silver (i.e., an Ag film; hereinafter, also referred to as a "pure silver film") have poor high-temperature resistance and poor process resistance. Process resistance refers to, for example, resistance to various conditions of patterning to pattern the deposited mirrors into a desired shape. These conditions include, for example, high-temperature baking, and detachment of a resist with an organic solvent. After these processes, the reflectance of the Ag film greatly lowers, and because the Ag film cannot sufficiently exhibit the functions required of the mirrors, the performance of the interference filter drops. The Ag film also undergoes a large decrease in reflectance due to aging.

In view of these shortcomings, various studies have been made regarding alternate mirror materials.

For example, JP-A-2009-251105 describes an interference filter in which a Ag-C alloy obtained by adding carbon (C) to pure silver is used for the mirrors.

However, the resultant interference filter still shows a performance drop even with the Ag-C alloy film mirror described in JP-A-2009-251105. That is, although the use of an Ag-C alloy film for the mirrors improves the high-temperature resistance and process resistance, the reflectance is lowered as compared with a pure silver film. Accordingly, there is still a need for an interference filter in which a performance drop of the filter is suppressed.

US-A-2010/0142067 discloses an optical filter comprising first and second mirrors formed on first and second substrates respectively, the second substrate having a concave portion in which the second mirror is located. The mirrors may be formed of a carbon-containing silver alloy film.

US-A-2003/180177 and US-A-2006/134367 disclose a reflective Ag-Sm-Cu alloy film. US-A-2004/263984 and US-A-2004/028912 teach a reflective Ag-Bi-Nd alloy film.

### SUMMARY

An aim of the present invention is to provide an interference filter, an optical module, and an analyzing device in which a performance drop due to processing or aging can be suppressed.

According to an aspect of the invention, there is provided an interference filter according to claim 1.

The reflecting films in the interference filter have light transmission characteristic and light reflection characteristics. For example, the incident light between the two (a pair of) reflecting films that has entered from outside through one of the reflecting films is reflected between the reflecting films, and light of a specific wavelength is allowed to pass through one of the reflecting films.

According to the above aspect of the invention, the opposing reflecting films include a Ag-Sm-Cu alloy film or a Ag-Bi-Nd alloy film. These alloy films have the same level of reflectance as a pure silver film, and have superior high-temperature resistance and process resistance relative to pure silver or Ag-C alloy. The extent of reflectance drop due to processing or aging is thus smaller, and the performance drop of the interference filter can be suppressed.

Because the alloy films have a thickness from 30 nm to 80 nm, inclusive, the reflecting films function to reflect and transmit light, and changes in reflectance and transmittance due to processing or aging can be suppressed. As a result, an interference filter can be provided that can suppress the reflection and transmission from being lowered.

With an alloy film thickness less than 30 nm, the reflectance of the alloy film lowers because of the thinness of the film, and lowers even further by processing or aging. Also, when the alloy film is deposited using a sputtering method, the fast sputtering speed makes it difficult to control the alloy film thickness, which may lower production stability. On the other hand, an alloy film thickness above 80 nm lowers light transmittance, and impairs the functionality of the mirrors.

It is preferable that the Ag-Sm-Cu alloy film have a Sm content of from 0.1 atom% to 0.5 atom%, inclusive, a Cu content of from 0.1 atom% to 0.5 atom%, inclusive, and a total Sm and Cu content of 1 atom% or less.

Because of the foregoing composition of the Ag-Sm-Cu alloy film, a reflectance drop due to processing or aging is further reduced, and a performance drop of the interference filter can be more reliably suppressed. With a Sm and Cu content below 0.1 atom%, the reflectance drop due to processing or aging increases. With a Sm and Cu content above 0.5 atom%, the reflectance lowers. The reflectance also lowers when the total Sm and Cu content exceeds 1 atom%.

It is preferable that the Ag-Bi-Nd alloy film have a Bi content of from 0.1 atom% to 3 atom%, inclusive, and a Nd content of from 0.1 atom% to 5 atom%, inclusive.

Because of the foregoing composition of the Ag-Bi-Nd alloy film, a reflectance drop due to processing or aging is further reduced, and a performance drop of the interference filter can be more reliably suppressed. With a Bi and Nd content below 0.1 atom%, the reflectance drop due to processing or aging increases. The reflectance lowers when the Bi content exceeds 3 atom% or when the Nd content exceeds 5 atom%.

It is preferable that the reflecting films be monolayer films formed of the alloy film.

Because the reflecting films are monolayer films formed of the Ag-Sm-Cu alloy film or Ag-Bi-Nd alloy film, the reflecting films show high reflectance over a wide wavelength band in the visible light wavelength range. Note that, in the invention, the visible light wavelength range is from 400 nm to 700 nm, inclusive.

It is preferable that the interference filter further include substrates that support the reflecting films, wherein the reflecting films including the alloy film include a dielectric film, wherein the dielectric film and the alloy film are provided on the substrates in this order from the substrate side, and wherein the dielectric film is a monolayer film of titanium oxide (TiO₂), or a multilayer film as a laminate of a titanium oxide (TiO₂) or tantalum pentoxide (Ta₂O₅) layer and a silicon oxide (SiO₂) or magnesium fluoride (MgF₂) layer.

Because the reflecting films include the compound dielectric film on the substrate side, the reflectance on the shorter wavelength side of the visible light wavelength range can be improved more than when the dielectric film is not provided.

It is preferable that the reflecting films including the dielectric film and the alloy film include a protective film, wherein the dielectric film, the alloy film, and the protective film are provided on the substrates in this order from the substrate side, and wherein the protective film contains silicon oxide (SiO₂), silicon oxynitride (SiON), silicon nitride (SiN), or alumina.

Because the dielectric film and the alloy film are protected by the protective film, the reflectance drop of the alloy film in the reflecting films due to processing or aging can be further reduced, and a performance drop of the interference filter can be more reliably suppressed.

According to another aspect of the invention, there is provided an optical module that includes any of the interference filters above, and a detector that detects the quantity of the light selected (passed) by the interference filter.

According to this aspect of the invention, a performance drop of the interference filter can be suppressed in the manner described above. Thus, the light selected by the interference filter can be detected by the detector, and the optical module can accurately detect the quantity of the light having the desired wavelength.

According to still another aspect of the invention, there is provided an analyzing device that includes the optical module, and a processor that performs a photometric process based on the quantity of light detected by the detector.

Examples of the analyzing device include a light measurement device that analyzes the chromaticity or brightness of incident light on the interference filter based on the quantity of the light detected by an optical module, a gas detector that detects gas types by detecting the gas absorption wavelength, and an optical communications apparatus that acquires data contained in the wavelength of received light.

As described above, the optical module enables accurate detection of the quantity of light having a desired wavelength, and thus the analyzing device can perform an accurate analysis based on the accurate light quantity.

### BRIEF DESCRIPTION OF THE DRAWINGS

The invention will be described with reference to the accompanying drawings, wherein like numbers reference like elements.
FIG. 1 is a diagram illustrating a schematic structure of an colorimetric apparatus according to a first embodiment of the invention.
FIG. 2 is a plan view illustrating a schematic structure of an etalon that forms an interference filter of the first embodiment.
FIG. 3 is a cross sectional view of the interference filter taken along the line III-III of FIG. 2.
FIG. 4 is a cross sectional view illustrating a schematic structure of an etalon that forms an interference filter according to a second embodiment of the invention.
FIG. 5 is a cross sectional view illustrating a schematic structure of an etalon that forms an interference filter according to a third embodiment of the invention.

### DESCRIPTION OF EXEMPLARY EMBODIMENTS

Embodiments of the invention are described below with reference to the accompanying drawings.

### First Embodiment

### 1. Overall Configuration of the Colorimetric Apparatus

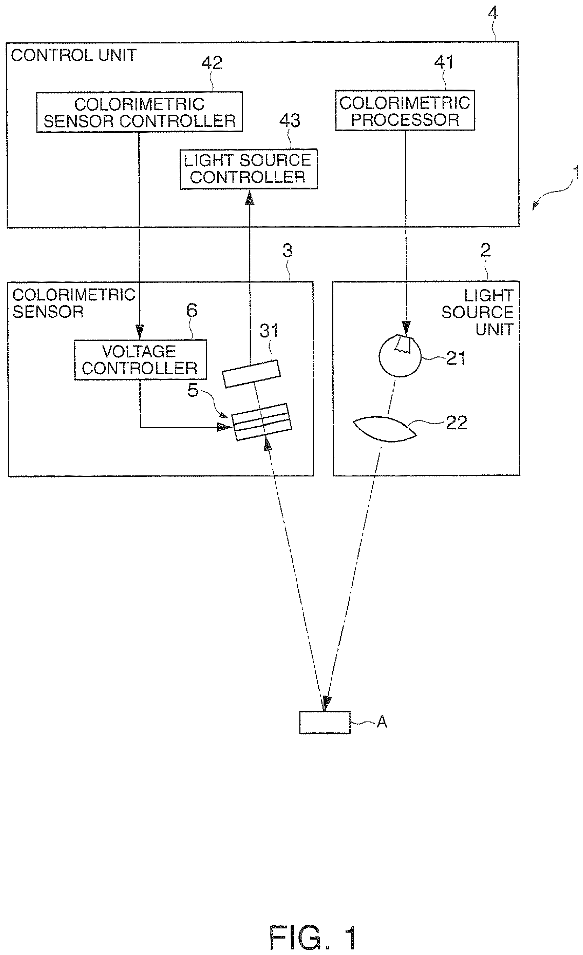

FIG. 1 is a diagram illustrating a schematic structure of a colorimetric apparatus according to an embodiment of the invention.

A colorimetric apparatus 1 is an analyzing device according to an embodiment of the invention, and, as illustrated in FIG. 1, includes a light source unit 2 that emits light onto a tested object A, a colorimetric sensor 3 as an optical module according to an embodiment of the invention, and a control unit 4 that controls the entire operation of the colorimetric apparatus 1. The colorimetric apparatus 1 is an apparatus that analyzes and measures the chromaticity of the tested object light, specifically, the color of the tested object A, based on the output detection signal from the colorimetric sensor 3 following the reception of the tested object light at the colorimetric sensor 3 after the emitted light from the light source unit 2 is reflected off the tested object A.

### 2. Configuration of the Light Source Unit

The light source unit 2 includes a light source 21, and a plurality of lenses 22 (only one lens is shown in FIG. 1), and emits white light to the tested object A. The lenses 22 include a collimating lens, with which the light source unit 2 produces parallel rays from the white light emitted by the light source 21. The light source unit 2 then emits the resulting light towards the tested object A through a projection lens (not illustrated).

Note that, though the colorimetric apparatus 1 is described as being provided with the light source unit 2 in the present embodiment, the colorimetric apparatus 1 may be configured without the light source unit 2, provided that the tested object A is, for example, a light emitting member such as a liquid crystal panel.

### 3. Configuration of the Colorimetric Sensor

As illustrated in FIG. 1, the colorimetric sensor 3 includes an etalon 5 as an interference filter according to the embodiment of the invention, a detector 31 that receives the light transmitted through the etalon 5, and a voltage controller 6 that alters the wavelength of the light that passes through the etalon 5. The colorimetric sensor 3 also includes an incident light lens (not illustrated) provided on the opposite side from the etalon 5, that guides the reflected light (tested object light) from the tested object A into the sensor. The etalon 5 disperses only light having a predetermined wavelength in the tested object light incident through the incident light lens. The dispersed light from the etalon 5 is then received by the detector 31 in the colorimetric sensor 3.

The detector 31 is configured from a plurality of photoelectric converting elements, and generates an electric signal according to the quantity of received light. The detector 31 is connected to the control unit 4, and outputs the generated electric signal to the control unit 4 as a reception signal.

### 3-1. Schematic Structure of the Etalon

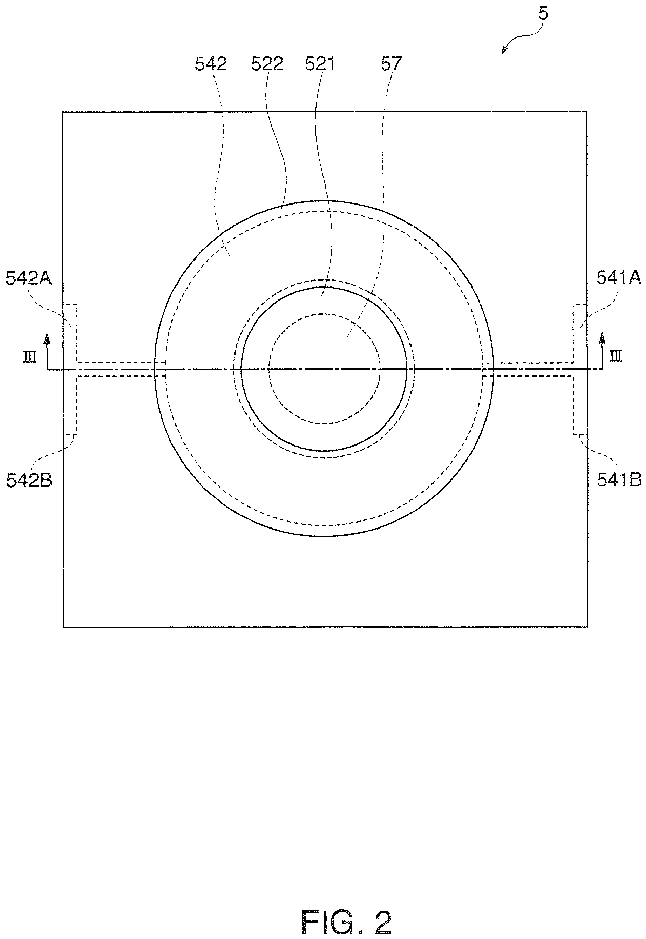

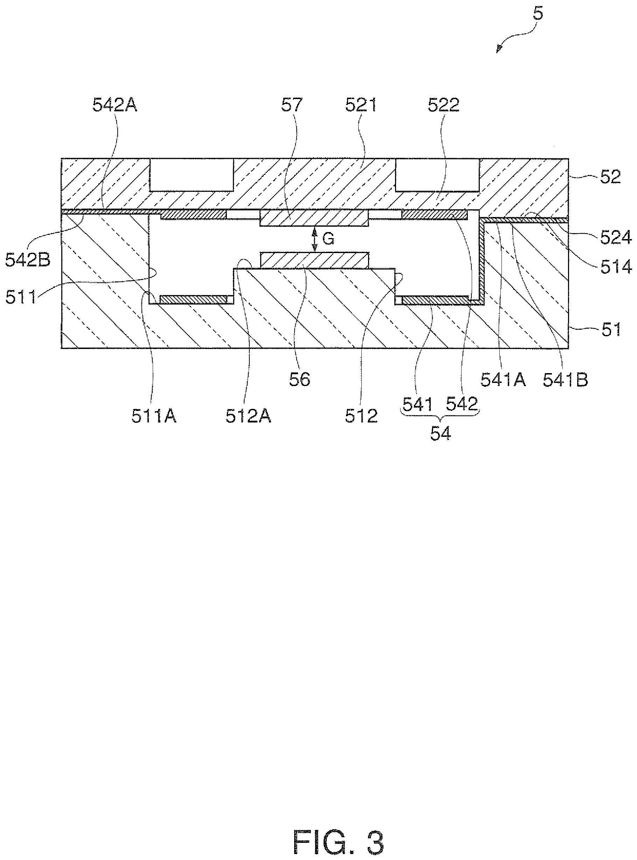

FIG. 2 is a plan view illustrating a schematic structure of the etalon 5 configured as an interference filter according to the embodiment of the invention. FIG. 3 is a cross sectional view illustrating a schematic structure of the etalon 5. Note that, in contrast to FIG. 1 in which the tested object light is incident on the etalon 5 from below, the tested object light is incident from above in FIG. 3. The etalon 5 is a so-called wavelength variable interference filter, which varies the gap size between two (a pair of) mirrors by external force.

As illustrated in FIG. 2, the etalon 5 is a flat, square-shaped planar optical member with sides measuring, for example, 10 mm in length. Further, as illustrated in FIG. 3, the etalon 5 includes two (a pair of) substrates, which will be referred to as a first substrate 51 and a second substrate 52 in the present embodiment.

A fixed mirror 56 and a movable mirror 57 are provided as a pair of reflecting films between the first substrate 51 and the second substrate 52.

The fixed mirror 56, which is one of the reflecting films, is provided on the first substrate 51, while the movable mirror 57, which is the other reflecting film, is provided on the second substrate 52. The fixed mirror 56 is fixed to the first substrate 51 on the opposing surface from the second substrate 52, and the movable mirror 57 is fixed to the second substrate 52 on the surface opposing the first substrate 51. The fixed mirror 56 and the movable mirror 57 are disposed face to face with a gap G therebetween.

Further, a static actuator 54 that adjusts the dimension of the gap G between the fixed mirror 56 and the movable mirror 57 is provided between the first substrate 51 and the second substrate 52. The static actuator 54 includes a first displacement electrode (fixed electrode) 541 provided on the first substrate 51 side, and a second displacement electrode (movable electrode) 542 provided on the second substrate 52 side. The first displacement electrode 541 and the second displacement electrode 542 are disposed face to face with each other. In response to a voltage being applied between the first displacement electrode 541 and the second displacement electrode 542, an electrostatic attractive force acts between the first displacement electrode 541 and the second displacement electrode 542, deforming the second substrate 52 and varying the dimension of the gap G between the mirrors. The wavelength of the light emitted from the etalon 5 then varies according to the dimension of the gap G between the mirrors.

Before describing the specific configuration of the etalon 5, the fixed mirror 56 and the movable mirror 57, which form the pair of reflecting films, are described first.

### 3-1-1. Configuration of a Pair of Reflecting Films

In the present embodiment, the fixed mirror 56 and the movable mirror 57 which form a pair of reflecting films are both monolayer films. The monolayer film is either a Ag-Sm-Cu alloy film that contains silver (Ag), samarium (Sm), and copper (Cu), or a Ag-Bi-Nd alloy film that contains silver (Ag), bismuth (Bi), and neodymium (Nd). The Ag-Sm-Cu alloy film is configured essentially from silver (Ag), samarium (Sm), and copper (Cu), and the Ag-Bi-Nd alloy film is configured essentially from silver (Ag), bismuth (Bi), and neodymium (Nd) . The Ag-Sm-Cu alloy film and the Ag-Bi-Nd alloy film may also contain trace amounts of impurity elements (for example, such as oxygen, nitrogen, and carbon) in addition to the constituting elements of the alloy films, provided that the advantages of the embodiment are not lost.

The balance between the reflectance and the transmittance of the fixed mirror 56 and the movable mirror 57 is important in the etalon 5. While high reflectance can be obtained by increasing the thicknesses of the alloy films forming the fixed mirror 56 and the movable mirror 57, the increased film thickness lowers transmittance, and thus presents a detection sensitivity problem for the interference filter. On the other hand, while the transmittance can be increased by reducing the thicknesses of the alloy films forming the fixed mirror 56 and the movable mirror 57, the reduced film thickness lowers reflectance, and thus lowers the dispersion performance of the interference filter.

From this standpoint, the thickness of each alloy film forming the fixed mirror 56 and the movable mirror 57 is from 30 nm to 80 nm, inclusive. With an alloy film thickness less than 30 nm, the reflectance of the alloy film lowers because of the thinness of the film, and lowers even further by processing or aging. Further, when the alloy film is deposited using a sputtering method, the fast sputtering speed makes it difficult to control the alloy film thickness, which may lower production stability. On the other hand, an alloy film thickness above 80 nm lowers light transmittance, and impairs the function of the etalon 5 provided by the fixed mirror 56 and the movable mirror 57. In view of these competing desires, the thickness of the alloy film is preferably from 40 nm to 60 nm, inclusive.

When the fixed mirror 56 and the movable mirror 57 are Ag-Sm-Cu alloy films, it is preferable that the Ag-Sm-Cu alloy film contain Sm in a content of from 0.1 atom% to 0.5 atom%, inclusive, and Cu in a content of from 0.1 atom% to 0.5 atom%, inclusive, and that the total content of Sm and Cu be 1 atom% or less. When the Sm and Cu contents are less than 0.1 atom%, the reflectance lowers even further by processing or aging. The reflectance also lowers when the Sm and Cu contents exceed 0.5 atom%, or when the total content of Sm and Cu exceeds 1 atom%. Note that the remaining part, which is essentially Ag, may contain trace amounts of impurities, provided that the advantages of the embodiment are not lost.

When the fixed mirror 56 and the movable mirror 57 are Ag-Bi-Nd alloy films, it is preferable that the Bi be contained in an amount of from 0.1 atom% to 3 atom%, inclusive, and the Nd from 0.1 atom% to 5 atom%, inclusive. The Bi and Nd contents in the Ag-Bi-Nd alloy film are preferably from 0.1 atom% to 2 atom%, inclusive, for Bi, and from 0.1 atom% to 3 atom%, inclusive, for Nd, and more preferably from 0.1 atom% to 2 atom%, inclusive, for Bi, and from 0.1 atom% to 3 atom%, inclusive, for Nd. When the Bi and Nd contents are less than 0.1 atom%, the reflectance lowers even further by processing or aging. The reflectance also lowers when the Bi content exceeds 3 atom%, or when the Nd content exceeds 5 atom%. Note that the remaining part, which is essentially Ag, may contain trace amounts of impurities, provided that the advantages of the embodiment are not lost.

The fixed mirror 56 and the movable mirror 57 are formed using a target material of the alloy film composition above, using a known method such as sputtering.

### 3-1-2. Configuration of the Pair of Substrates

The first substrate 51 and the second substrate 52 which form a pair of substrates are formed of, for example, various glasses such as soda glass, crystalline glass, fused quartz, lead glass, potassium glass, borosilicate glass, and alkali-free glass, or by using crystals. Of these materials for the pair of substrates, for example, glasses that contain alkali metals such as sodium (Na) and potassium (K) are preferred. By using such glass materials for the first substrate 51 and the second substrate 52, the adhesion for the fixed mirror 56 and the movable mirror 57 (reflecting films) and for the electrodes, and the bond strength of the substrates can be improved, as will be described later. Further, because glass has desirable transmission characteristics for visible light, the absorption of light by the first substrate 51 and the second substrate 52 can be suppressed for measuring the color of the tested object A as in the present embodiment. Glass is therefore suited for colorimetric processes. The first substrate 51 and the second substrate 52 are formed into a single unit by being bonded with a plasma polymerization film (not illustrated) at the bonding faces 514 and 524 formed along the peripheries thereof.

The first substrate 51 is formed by etching a glass base material formed to have a thickness of, for example, 500 µm. Specifically, as illustrated in FIG. 3, the first substrate 51 is etched to form an electrode forming groove 511 and a mirror fixing portion 512.

The electrode forming groove 511 is preferably formed in a circle around the center of the flat surface in a planar view of the etalon 5 as viewed in the substrate thickness direction (hereinafter, "etalon planar view"). The mirror fixing portion 512, as illustrated in FIG. 3, is formed to project out towards the second substrate 52 from the central portion of the electrode forming groove 511.

In the electrode forming groove 511, a ring-like electrode fixing surface 511A is formed along the outer circumference of the mirror fixing portion 512 and the inner walls of the electrode forming groove 511. The fixed electrode 541 is formed on the electrode fixing surface 511A. The fixed electrode 541 is connected to the voltage controller 6 via a fixed electrode extracting lead 541A and an external lead (not illustrated). The fixed electrode extracting lead 541A is connected to the external lead through a fixed electrode extracting portion 541B formed between the bonding face 514 and the bonding face 524.

The mirror fixing portion 512 is preferably formed in the shape of a cylinder, concentric to the electrode forming groove 511, and with a radial dimension smaller than that of the electrode forming groove 511. Note that, in the present embodiment, as illustrated in FIG. 3, the mirror fixing face 512A of the mirror fixing portion 512 on the opposite side from the second substrate 52 is closer to the second substrate 52 than to the electrode fixing surface 511A.

The first substrate 51 also includes an antireflective film (AR; not illustrated) on the lower surface opposite from the top surface facing the second substrate 52, and in a position that corresponds to the fixed mirror 56. The antireflective film is formed by alternately laminating a low-refractive-index film and a high-refractive-index film, and lowers the reflectance and increases the transmittance of visible light at the surface of the first substrate 51.

The second substrate 52 is formed by etching a glass substrate formed to have a thickness dimension of, for example, 200 µm.

Specifically, as shown in the planar view of FIG. 2, the second substrate 52 includes a circular movable portion 521 formed around the substrate center, and a joining and holding portion 522 concentric to the movable portion 521, that holds the movable portion 521. The joining and holding portion 522 is dimensioned to have substantially the same outer diameter as that of the electrode forming groove 511 of the first substrate 51.

The movable portion 521 has a larger thickness dimension than that of the joining and holding portion 522. For example, in the present embodiment, the movable portion 521 has a thickness dimension of 200 µm as does the second substrate 52.

The movable portion 521 also includes an antireflective film (AR; not illustrated) on the top surface opposite from the first substrate 51. The antireflective film has the same configuration as that of the antireflective film formed on the first substrate 51, and is formed by alternately laminating a low-refractive-index film and a high-refractive-index film.

The joining and holding portion 522 is a diaphragm surrounding the movable portion 521, and has a thickness dimension of, for example, 50 µm. The movable electrode 542 is formed in the shape of a ring on the surface of the joining and holding portion 522 opposite from the first substrate 51. The movable electrode 542 faces the fixed electrode 541 with an electromagnetic gap of about 1 µm.

The movable electrode 542 is connected to the voltage controller 6 via a movable electrode extracting lead 542A and an external lead (not illustrated). The movable electrode extracting lead 542A is connected to the external lead through a movable electrode extracting portion 542B formed between the bonding face 514 and the bonding face 524.

The movable electrode 542 and the fixed electrode 541 form the static actuator 54.

In the etalon 5, an electrostatic attractive force is generated between the fixed electrode 541 and the movable electrode 542 in response to a predetermined voltage being applied to the static actuator 54. The electrostatic attractive force moves the movable portion 521 along the substrate thickness direction and deforms the second substrate 52, and varies the dimension of the gap G between the mirrors. The dimension of the gap G between the mirrors is controlled by adjusting the applied voltage and controlling the electrostatic attractive force that is generated between the electrodes 541 and 542, thereby making it possible to select dispersed light from the tested object light.

### 4. Configuration of the Control Unit

The control unit 4 controls the entire operation of the colorimetric apparatus 1.

The control unit 4 may be realized by using, for example, a general-purpose personal computer, a portable information terminal, or a colorimetry-designated computer.

As illustrated in FIG. 1, the control unit 4 includes a light source controller 41, a colorimetric sensor controller 42, and a colorimetric processor 43 (a processor according to the embodiment of the invention), among others.

The light source controller 41 is connected to the light source unit 2. The light source controller 41 outputs, for example, based on a user's settings input, a predetermined control signal to the light source unit 2, and the light source unit 2 emits white light of a predetermined brightness.

The colorimetric sensor controller 42 is connected to the colorimetric sensor 3. The colorimetric sensor controller 42 sets, for example, based on a user's settings input, the wavelength of light to be received by the colorimetric sensor 3, and outputs a control signal to the colorimetric sensor 3, signaling that the quantity of the light of this wavelength will be detected. In response, the voltage controller 6 of the colorimetric sensor 3 sets, based on the control signal, an applied voltage for the static actuator 54 so as to pass only the wavelength of light desired by the user.

The colorimetric processor 43 controls the colorimetric sensor controller 42, and varies the gap between the reflecting films of the etalon 5 to vary the wavelength of the light that passes through the etalon 5. The colorimetric processor 43 acquires, based on the input reception signal from the detector 31, the quantity of the light that passed through the etalon 5. The colorimetric processor 43 calculates, based on the quantity of the light of each wavelength, the chromaticity of the light reflected by the tested object A.

### 5. Etalon Producing Method

The elements of the first substrate 51, such as the mirror fixing portion 512, and the elements of the second substrate 52, such as the movable portion 521 are formed by etching glass substrate material.

After etching, the Ag-Sm-Cu alloy film or the Ag-Bi-Nd alloy film is formed on each of the first substrate 51 and the second substrate 52, using a sputtering method. In the present embodiment, these films are formed as monolayer films.

The patterning process of patterning the sputtered alloy film into a desired shape is performed by wet etching. The wet etching involves the following processes.
(A) A resist film as an etching mask is formed on the alloy film in desired patterns. The alloy film is exposed to high temperature during the curing of the resist.
(B) The resist film is detached with an organic resist-detaching solution. Here, the alloy film is exposed to an organic solvent.

Because the alloy films are exposed to these processes, high-temperature resistance and organic solvent resistance are desired for the alloy films. The alloy films are also desired to have other resistance properties, including high-temperature and high-humidity resistance, sulfidation resistance, and halogen resistance. In the following, the resistance properties desired for the alloy films in the etalon manufacturing steps also will be collectively referred to as "process resistance", particularly "patterning process resistance" for the resistance required of the alloy films in the patterning step.

After the wet etching process, the fixed mirror 56 and the movable mirror 57 are formed on the first substrate 51 and the second substrate 52, respectively.

The first substrate 51 and the second substrate 52 are then bonded to each other to obtain the etalon 5. In the bonding step, for example, a plasma polymerization film is deposited on the bonding faces 514 and 524, and these plasma polymerization films are mated to bond the first substrate 51 and the second substrate 52.

### 6. Advantages of the First Embodiment

In the etalon 5, the fixed mirror 56 and the movable mirror 57 include the Ag-Sm-Cu alloy film or the Ag-Bi-Nd alloy film that have superior high-temperature resistance and process resistance as compared to the pure silver or Ag-C alloy films. The Ag-Sm-Cu and Ag-Bi-Nd alloy films have reflectance comparable to that of the pure silver film, but have superior high-temperature resistance and process resistance than the pure silver film. Thus, the preferred alloy films do not undergo a large reflectance drop after processing, for example, such as wet etching and aging, and the performance drop of the etalon 5 can be suppressed.

Further, because the fixed mirror 56 and the movable mirror 57 including the Ag-Sm-Cu alloy film or the Ag-Bi-Nd alloy film in the etalon 5 have a thickness of from 30 nm to 80 nm, inclusive, the fixed mirror 56 and the movable mirror 57 allow passage of light, and suppress transmittance changes after processing or aging. As a result, the reflection and transmission of light in the etalon 5 can be suppressed from being lowered.

Further, because the Ag-Sm-Cu alloy film or the Ag-Bi-Nd alloy film in the etalon 5 has the foregoing composition range, the reflectance drop due to processing or aging can be further reduced, and the performance drop of the etalon 5 can be more reliably suppressed.

Further, because the fixed mirror 56 and the movable mirror 57 of the etalon 5 are monolayer films of Ag-Sm-Cu alloy or Ag-Bi-Nd alloy, the fixed mirror 56 and the movable mirror 57 have high reflectance over a wide wavelength band in the visible light wavelength range.

Further, because the Ag-Sm-Cu alloy film or the Ag-Bi-Nd alloy film have desirable adhesion for the glass substrate, the performance drop of the etalon 5 as a filter due to insufficient adhesion can be prevented.

### Second Embodiment

The following describes the second embodiment of the invention.

In the descriptions of the second embodiment below, the same constituting elements already described in the first embodiment will be referred to by the same reference numerals, and explanations thereof will be omitted or simplified.

The second embodiment differs from the first embodiment in that the fixed mirror 56 and the movable mirror 57 of an etalon 5A include dielectric films 561 and 571 and alloy films 562 and 572. As in the first embodiment, the alloy films 562 and 572 are Ag-Sm-Cu alloy films or Ag-Bi-Nd alloy films.

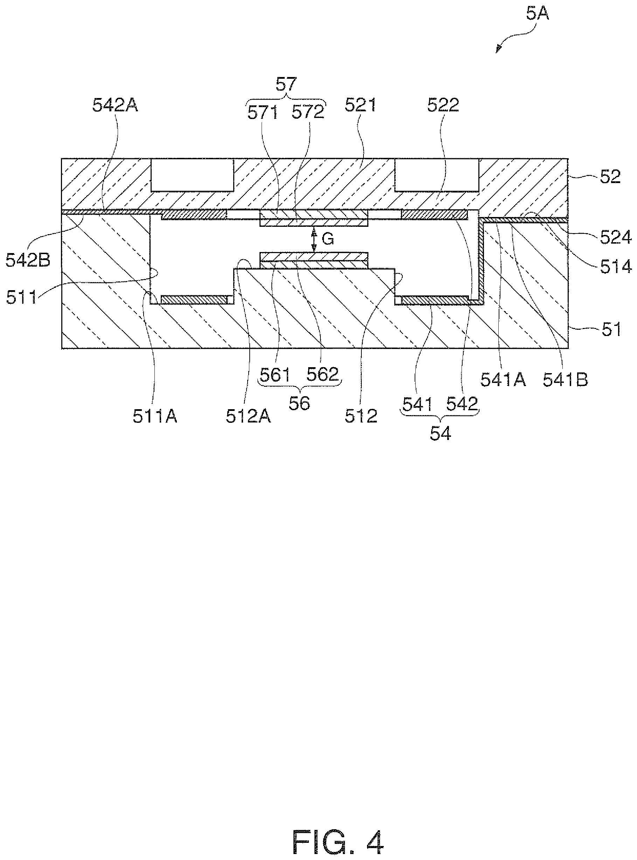

As illustrated in FIG. 4, the dielectric film 561 and the alloy film 562 are provided on the first substrate 51, in this order from the first substrate 51 side. Specifically, the dielectric film 561 is provided between the first substrate 51 and the alloy film 562. Similarly, the dielectric film 571 and the alloy film 572 are provided on the second substrate 52, in this order from the second substrate 52 side. Specifically, the dielectric film 571 is provided between the second substrate 52 and the alloy film 572.

The dielectric films 561 and 571 are monolayer films of titanium oxide (TiO₂), or multilayer films that include a titanium oxide (TiO₂) or tantalum pentoxide (Ta₂O₅) layer and a silicon oxide (SiO₂) or magnesium fluoride (MgF₂) layer. In the case of the dielectric multilayer film, a high-refractive-index material (TiO₂, Ta₂O₅) layer, and a low-refractive-index material (SiO₂, MgF₂) layer are laminated. The monolayer film, and the thickness of each layer and the number of layers in the multilayer film are appropriately set according to the desired optical characteristics.

### Advantages of the Second Embodiment

In the etalon 5A according to the second embodiment, the fixed mirror 56 and the movable mirror 57 are configured as a laminate of the dielectric film 561 and the alloy film 562, and a laminate of the dielectric film 571 and the alloy film 572, respectively. This configuration improves the reflectance on the shorter wavelength side of the visible light range, as compared to the configuration that includes only the alloy films 562 and 572. Thus, the high-reflectance wavelength band can be further widened, and the etalon 5A provided with the fixed mirror 56 and the movable mirror 57 can have high reflectance over the visible light range.

Further, because of the desirable adhesion between the dielectric films 561 and 571 and the alloy films 562 and 572, and between the dielectric films 561 and 571 and the glass substrates, a performance drop of the etalon 5A due to insufficient adhesion can be suppressed.

### Third Embodiment

The following describes the third embodiment according to the invention.

In the descriptions of the third embodiment below, the same constituting elements already described in the first and second embodiments will be referred to by the same reference numerals, and explanations thereof will be omitted or simplified.

The third embodiment differs from the first and second embodiments in that the fixed mirror 56 and the movable mirror 57 of an etalon 5B include protective films 563 and 573, in addition to the dielectric films 561 and 571 and the alloy films 562 and 572. The alloy films 562 and 572 are Ag-Sm-Cu alloy films or Ag-Bi-Nd alloy films, as in the first embodiment. The dielectric films 561 and 571 are the same as those described in the second embodiment.

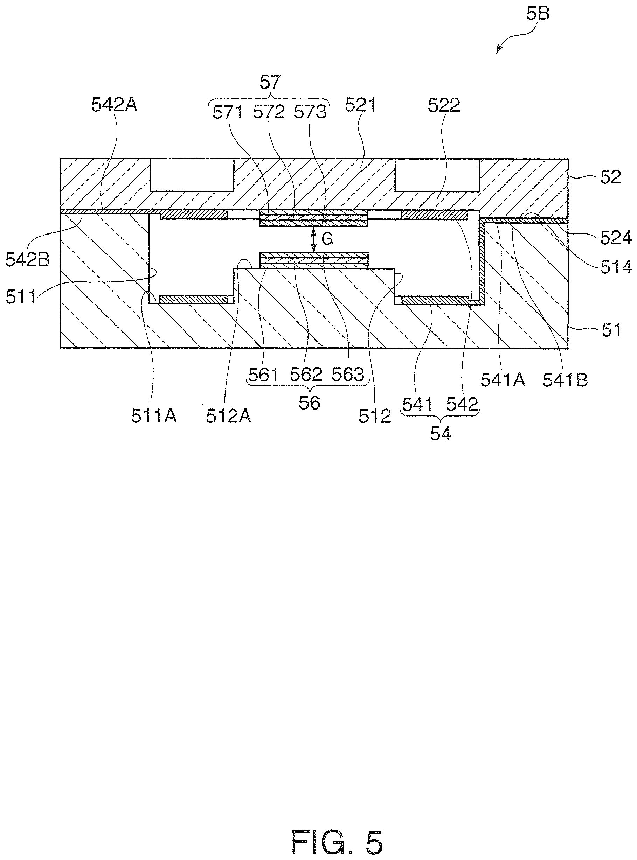

As illustrated in FIG. 5, the dielectric film 561, the alloy film 562, and the protective film 563 are provided on the first substrate 51, in this order from the first substrate 51 side. Specifically, the protective film 563 is provided on the opposite side of the alloy film 562 as the dielectric film 561. Similarly, the dielectric film 571, the alloy film 572, and the protective film 573 are provided on the second substrate 52 , in this order from the second substrate 52 side. The protective film 573 is provided on the opposite side of the alloy film 572 as the dielectric film 571.

The protective films 563 and 573 contain silicon oxide (SiO₂), silicon oxynitride (SiON), silicon nitride (SiN), or alumina. Each protective film has a thickness of preferably from 10 nm to 20 nm, inclusive. With this thickness range, the fixed mirror 56 and the movable mirror 57 can be protected without lowering reflectance and transmittance.

### Advantages of the Third Embodiment

In the etalon 5B according to the third embodiment, because the dielectric films 561 and 571 and the alloy films 562 and 572 are protected by the protective films 563 and 573, a reflectance drop of the alloy films 562 and 572 in the fixed mirror 56 and the movable mirror 57 due to processing or aging can be suppressed, and thus a performance drop of the interference filter can be reliably prevented.

### Other Embodiments

It should be noted that the invention is not limited to the foregoing embodiments, and various alterations, modifications, and other changes are also within the scope of the invention.

In the foregoing embodiments, the etalons are described as having a planar square shape. However, the etalons are not limited to this, and, for example, may have a planar circular shape, or a planar polygonal shape.

Further, the fixed mirror 56 and the movable mirror 57 are not necessarily required to be formed of the same alloy films. For example, the fixed mirror 56 may be a Ag-Sm-Cu alloy film, and the movable mirror 57 may be a Ag-Bi-Nd alloy film, and vice-versa.

Further, the etalons are described as being wavelength variable interference filters in the foregoing embodiments. However, the invention is not limited to this, and the mirror pair using the alloy films also can be used for interference filters in which the gap between the mirrors is not variable.

Further, the heights of the electrode fixing surface 511A and the mirror fixing face 512A are not limited to the configurations of the foregoing embodiments, and are appropriately set according to the dimension of the gap G between the fixed mirror 56 fixed to the mirror fixing face 512A and the movable mirror 57 formed on the second substrate 52, the dimension between the fixed electrode 541 and the movable electrode 542, and the thickness dimension of the fixed mirror 56 and the movable mirror 57. For example, when the thickness dimension of the dielectric multilayer films provided in the fixed mirror 56 and the movable mirror 57 is adapted to increase, the electrode fixing surface 511A and the mirror fixing face 512A may be formed on the same plane, or the mirror fixing face 512A may be formed on the bottom surface of a cylindrical mirror fixing groove formed at the central portion of the electrode fixing surface 511A.

The foregoing embodiments describe the configuration in which a single extracting electrode is provided for the fixed electrode 541. However, the invention is not limited to this, and more than one extracting electrode may be provided. In this case, one of the two extracting electrodes may be used as a voltage applying terminal for applying voltage to the fixed electrode 541, while the other is used as a charge detection terminal for detecting the charge held by the fixed electrode 541. The same is the case for the movable electrode 542.

Further, even though the foregoing embodiments described the etalons in which the gap G between the mirrors is adjustable with the static actuator 54, the gap G between the mirrors may be made adjustable with other driving members. For example, a static actuator or a piezoelectric member may be used that is provided on the side of the second substrate 52 opposite from the first substrate 51, and that presses the second substrate 52 by repulsion force.

Further, the invention is not limited to the configuration in which, as in the third embodiment, the dielectric film, the alloy film, and the protective film are laminated on the substrate, and may be configured to include the alloy film and the protective film laminated on the substrate without the dielectric film.

The specific structures and procedures for implementing the invention can be appropriately changed to the extent that such changes can achieve the object of the invention.

### Examples

The invention is described below in more detail based on the high-temperature resistance and process resistance of the alloy films as an example. Note, however, that the invention is not limited in any way by the descriptions of the following example.

### 1. High-Temperature Resistance

The high-temperature resistance of a pure silver film and alloy films (Ag-C alloy film, Ag-Sm-Cu alloy film, and Ag-Bi-Nd alloy film) was evaluated.

The pure silver film and the alloy films were formed on a flat glass substrate in a thickness of 40 nm by sputtering, using a pure silver film and the target materials of the following compositions.

Ag-C: C content of 5.0 atom%, the remaining part is essentially Ag.

Ag-Sm-Cu: Sm content of 0.5 atom%, Cu content of 0.5 atom%, and the remaining part is essentially Ag.

Ag-Bi-Nd: Bi content of 1.0 atom%, Nd content of 0.5 atom%, the remaining part is essentially Ag.

High-temperature resistance was evaluated by comparing the pure silver film and the alloy films with regard to the post-deposition initial reflectance and the reflectance after the heat treatment performed at 250°C for 1 hour in an atmospheric environment (after a high temperature test). The reflectance was measured in the visible light range, specifically, at the wavelength of from 400 nm to 700 nm, inclusive, using a spectrophotometer.

Table 1 presents the initial reflectance (%) and the post-heat treatment reflectance (%) of the pure silver film and the alloy films at 400 nm, 550 nm, and 700 nm. Table 1 also presents changes in reflectance (percentage reduction), calculated as the difference between the initial reflectance and the post-heat treatment reflectance.

**Table 1**

| | | Initial reflectance [%] | | | Reflectance after high-temperature test [%] | | | Change in reflectance [%] | | |
|---|---|---|---|---|---|---|---|---|---|---|
| | Wavelength [nm] | 400 | 550 | 700 | 400 | 550 | 700 | 400 | 550 | 700 |
| Film constitution | Pure silver | 74.1 | 90.1 | 95 | 48.2 | 78.5 | 86.6 | 25.9 | 11.6 | 8.4 |
| | Ag-C | 65.5 | 85.1 | 91.8 | 61.4 | 82.3 | 90.1 | 4.1 | 2.8 | 1.7 |
| | Ag-Sm-Cu | 71.4 | 90.4 | 94.6 | 70.3 | 89.7 | 94.4 | 1.1 | 0.7 | 0.2 |
| | Ag-Bi-Nd | 71.1 | 90.4 | 94.8 | 70.5 | 89.9 | 94.7 | 0.6 | 0.5 | 0.1 |

As can be seen in Table 1, the Ag-Sm-Cu alloy film and the Ag-Bi-Nd alloy film had about the same levels of initial reflectance, though the values were smaller than those of the pure silver film at some wavelengths. However, it was found that the decrease in the reflectance of the alloy films after the high temperature test was smaller than those seen in the pure silver film and the Ag-C alloy film. The reflectance drop was particularly smaller in the Ag-Bi-Nd alloy film throughout the visible light wavelength range.

The pure silver film had a high post-deposition initial reflectance throughout the visible light wavelength range. However, the pure silver film after being exposed to the high temperature developed grain aggregates, which increased the surface roughness and greatly lowered the reflectance. The reflectance drop in the pure silver film was particularly prominent on the shorter wavelength side (400 nm) .

The Ag-C alloy film had a lower post-deposition initial reflectance than that of the Ag-Sm-Cu alloy film and the Ag-Bi-Nd alloy film, and showed a greater reflectance drop after the high temperature test as compared to the other alloy films.

### 2. Process Resistance

The pure silver film and the alloy films (Ag-C alloy film, Ag-Sm-Cu alloy film, and Ag-Bi-Nd alloy film) were evaluated with regard to process resistance.

As in the evaluation of high-temperature resistance, the pure silver film and the alloy films were formed on a flat glass substrate by sputtering, using a pure silver film and the alloy film target materials of the compositions above.

The patterning process resistance was evaluated as a process resistance. The patterning process is as follows.
(1) Application of a positive resist to the pure silver film and the alloy films formed on the glass substrate, using a spin coater.
(2) Prebaking at 90°C for 15 minutes in a clean oven after the positive resist application.
(3) Exposure through a photomask using a contact aligner.
(4) Development with the developer tetramethylammonium hydroxide aqueous solution.
(5) Post-baking at 120°C for 20 minutes in a clean oven.
(6) Etching the pure silver film and the alloy films with an aqueous solution of phosphoric acid, nitric acid, and acetic acid, using the resist as an etching mask.
(7) Detaching the resist with an organic resist-detaching solution.

### a. Reflectance

As in the evaluation of high-temperature resistance, the pure silver film and the alloy films were compared with regard to the post-deposition initial reflectance and the reflectance after the patterning process.

Table 2 presents the initial reflectance (%) and the post-patterning process reflectance (%) of the pure silver film and the alloy films at 400 nm, 550 nm, and 700 nm.

Table 2 also presents changes in reflectance (percentage reduction), calculated as the difference between the initial reflectance and the post-patterning process reflectance.

**Table 2**

| | | Initial reflectance [%] | | | Reflectance after patterning process [%] | | | Change in reflectance [%] | | |
|---|---|---|---|---|---|---|---|---|---|---|
| | Wavelength [nm] | 400 | 550 | 700 | 400 | 550 | 700 | 400 | 550 | 700 |
| Film constitution | Pure silver | 74.1 | 90.1 | 95.0 | 46.8 | 75.9 | 84.1 | 27.3 | 14.2 | 10.9 |
| | Ag-C | 65.5 | 85.1 | 91.8 | 62.5 | 84.6 | 91.5 | 3.0 | 0.5 | 0.3 |
| | Ag-Sm-Cu | 71.4 | 90.4 | 94.6 | 69.9 | 90.2 | 94.6 | 1.5 | 0.2 | 0.0 |
| | Ag-Bi-Nd | 71.1 | 90.4 | 94.8 | 68.3 | 89.9 | 94.7 | 2.8 | 0.5 | 0.1 |

As can be seen in Table 2, the Ag-Sm-Cu alloy film and the Ag-Bi-Nd alloy film had about the same levels of initial reflectance, though the values were smaller than those of the pure silver film at some wavelengths. However, it was found that the decrease in the reflectance of the alloy films after the patterning process was smaller. The reflectance drop was particularly smaller in the Ag-Sm-Cu alloy film throughout the visible light wavelength range.

The pure silver film had a high post-deposition initial reflectance throughout the visible light wavelength range. However, the reflectance of the pure silver film greatly lowered after the patterning process. The reflectance drop in the pure silver film was particularly prominent on the shorter wavelength side (400 nm). Such decrease in the reflectance of the pure silver film is considered to be due to the exposure to high temperature in the resist baking, or exposure to the organic solvent during the detachment of the resist.

The Ag-C alloy film had a lower post-deposition initial reflectance than that of the Ag-Sm-Cu alloy film and the Ag-Bi-Nd alloy film, and showed a greater reflectance drop after the patterning process compared to the other alloy films.

### b. Transmittance

Changes in the transmittance of the alloy films (Ag-C alloy film, Ag-Sm-Cu alloy film, and Ag-Bi-Nd alloy film) after the patterning process were also measured as a process resistance.

Specifically, the alloy films were compared with regard to the post-deposition initial transmittance and the transmittance after the patterning process.

Table 3 presents the initial transmittance (%) and the post-patterning process transmittance (%) of the alloy films at 400 nm, 550 nm, and 700 nm. Table 3 also presents changes in transmittance (percentage increase), calculated as the difference between the post-patterning process transmittance and the initial transmittance.

**Table 3**

| | | Initial transmittance [%] | | | Transmittance after patterning process [%] | | | Change in transmittance [%] | | |
|---|---|---|---|---|---|---|---|---|---|---|
| | Wavelength [nm] | 400 | 550 | 700 | 400 | 550 | 700 | 400 | 550 | 700 |
| Film constitution | Ag-C | 17.6 | 8.2 | 4.2 | 20.4 | 8.7 | 4.5 | 2.8 | 0.5 | 0.3 |
| | Ag-Sm-Cu | 20.1 | 6.9 | 3.6 | 21.5 | 7.1 | 3.6 | 1.4 | 0.2 | 0.0 |
| | Ag-Bi-Nd | 19.7 | 7.6 | 4.0 | 22.3 | 8.0 | 4.1 | 2.6 | 0.5 | 0.1 |

As can be seen in Table 3, the Ag-Sm-Cu alloy film and the Ag-Bi-Nd alloy film had lower initial transmittance values than those of the Ag-C alloy film after the deposition at some wavelengths. However, it was found that the increase in the transmittance of these alloy films after the patterning process was smaller. The transmittance increase was particularly smaller in the Ag-Sm-Cu alloy film throughout the visible light wavelength range.

As these results demonstrate, the Ag-Sm-Cu alloy film and the Ag-Bi-Nd alloy film were found to show small reflectance changes after the high temperature test, and small reflectance and transmittance changes after the patterning process.

It was therefore found that a performance drop can be suppressed in a wavelength variable interference filter (etalon) that uses these alloy films as a pair of reflecting films. It was also found that a performance drop due to aging after the shipping of the wavelength variable interference filter product can also be suppressed, and that a highly reliable wavelength variable interference filter can be provided.

## Claims

1. An interference filter (5) comprising:
a first reflecting film (56), and
a second reflecting film (57) disposed to face the first reflecting film (56) with a gap (G) therebetween;
**characterized in that**:
the first and second reflecting films (56, 57) respectively include first and second alloy films, each of which is a Ag-Sm-Cu alloy film or a Ag-Bi-Nd alloy film; and
the first and second alloy films have a thickness of 30-80 nm.

2. An interference filter (5) according to Claim 1, wherein the Ag-Sm-Cu alloy film has a Sm content of 0.1-0.5 atom% and a Cu content of 0.1-0.5 atom%, and the Ag-Bi-Nd alloy film has a Bi content of 0.1-3 atom% and a Nd content of 0.1-5 atom%.

3. An interference filter (5) according to Claim 1, wherein the first alloy film is a first Ag-Sm-Cu alloy film, and the second alloy film is a second Ag-Sm-Cu alloy film.

4. An interference filter (5) according to Claim 3, wherein each of the first and second Ag-Sm-Cu alloy films has a Sm content of 0.1-0.5 atom% and a Cu content of 0.1-0.5 atom%.

5. An interference filter (5) according to Claim 1, wherein the first alloy film is a first Ag-Bi-Nd alloy film, and the second alloy film is a second Ag-Bi-Nd alloy film.

6. An interference filter (5) according to Claim 5, wherein each of the first and second Ag-Bi-Nd alloy films has a Bi content of 0.1-3 atom% and a Nd content of 0.1-5 atom%.

7. An interference filter (5) according to any preceding claim, wherein the first and second reflecting films (56, 57) are monolayer films formed of the first and second alloy films respectively.

8. An interference filter (5) according to any of Claims 1-6, further comprising:
a first substrate (51) supporting the first reflecting film (56), and
a second substrate (52) supporting the second reflecting film (57);
wherein the first reflecting film (56) includes a first dielectric film (561) provided between the first alloy film (562) and the first substrate (51), and the second reflecting film (57) includes a second dielectric film (571) provided between the second alloy film (572) and the second substrate (52), each of the first and second dielectric films (561, 571) being one of:
a monolayer film of titanium oxide (TiO₂), and
a multilayer film that is a laminate of:
a titanium oxide (TiO₂) or tantalum pentoxide (Ta₂0₅) layer, and
a silicon oxide (SiO₂) or magnesium fluoride (MgF₂) layer.

9. An interference filter (5) according to Claim 8, wherein:
the first reflecting film (56) includes a first protective film (563) provided on the first alloy film (562) opposite the first dielectric film (561),
the second reflecting film (57) includes a second protective film (573) provided on the second alloy film (572) opposite the second dielectric film (571), and
each of the first and second protective films (563, 573) contains silicon oxide (SiO₂), silicon oxynitride (SiON), silicon nitride (SiN) or alumina.

10. An optical module comprising:
an interference filter (5) according to any preceding claim, and
a detector (31) that detects a quantity of light selected by the interference filter (5).

11. An analyzing device comprising:
an optical module according to Claim 10, and
a processor that performs a photometric process based on the quantity of light detected by the detector (31).

## Patentansprüche

1. Interferenzfilter (5), umfassend:
einen ersten reflektierenden Film (56), und
einen zweiten reflektierenden Film (57), der dem ersten Film (56) gegenüberliegend angeordnet ist, mit einem Spalt (G) dazwischen;
**dadurch gekennzeichnet, dass**:
der erste und der zweite reflektierende Film (56, 57) einen ersten bzw. einen zweiten Legierungsfilm aufweist, von denen jeder ein Ag-Sm-Cu-Legierungsfilm oder ein Ag-Bi-Nd-Legierungsfilm ist; und
der erste und der zweite Legierungsfilm eine Dicke von 30-80 nm aufweisen.

2. Interferenzfilter (5) nach Anspruch 1, wobei der Ag-Sm-Cu-Legierungsfilm einen Sm-Gehalt von 0,1-0,5 Atom-% und einen Cu-Gehalt von 0,1-0,5 Atom-% aufweist und wobei der Ag-Bi-Nd-Legierungsfilm einen Bi-Gehalt von 0,1-3 Atom-% und einen Nd-Gehalt von 0,1-5 Atom-% aufweist.

3. Interferenzfilter (5) nach Anspruch 1, wobei der erste Legierungsfilm ein erster Ag-Sm-Cu-Legierungsfilm ist und wobei der zweite Legierungsfilm ein zweiter Ag-Sm-Cu-Legierungsfilm ist.

4. Interferenzfilter (5) nach Anspruch 3, wobei jeder von dem ersten und dem zweiten Ag-Sm-Cu-Legierungsfilm einen Sm-Gehalt von 0,1-0,5 Atom-% und einen Cu-Gehalt von 0,1-0,5 Atom-% aufweist.

5. Interferenzfilter (5) nach Anspruch 1, wobei der erste Legierungsfilm ein erster Ag-Bi-Nd-Legierungsfilm ist und wobei der zweite Legierungsfilm ein zweiter Ag-Bi-Nd-Legierungsfilm ist.

6. Interferenzfilter (5) nach Anspruch 5, wobei jeder von dem ersten und dem zweiten Ag-Bi-Nd-Legierungsfilm einen Bi-Gehalt von 0,1-3 Atom-% und einen Nd-Gehalt von 0,1-5 Atom-% aufweist.

7. Interferenzfilter (5) nach einem der vorstehenden Ansprüche, wobei der erste und der zweite reflektierende Film (56, 57) einschichtige Filme sind, die aus dem ersten bzw. dem zweiten Legierungsfilm gebildet sind.

8. Interferenzfilter (5) nach einem der Ansprüche 1-6, weiter umfassend:
ein erstes Substrat (51), das den ersten reflektierenden Film (56) trägt und
ein zweites Substrat (52), das den zweiten reflektierenden Film (57) trägt;
wobei der erste reflektierende Film (56) einen ersten dielektrischen Film (561) aufweist, der zwischen dem ersten Legierungsfilm (562) und dem ersten Substrat (51) vorgesehen ist, und der zweite reflektierende Film (57) einen zweiten dielektrischen Film (571) aufweist, der zwischen dem zweiten Legierungsfilm (572) und dem zweiten Substrat (52) vorgesehen ist, wobei jeder von dem ersten und dem zweiten dielektrischen Film (561, 571) einer der folgenden ist:
ein einschichtiger Film aus Titanoxid (TiO₂) und
ein mehrschichtiger Film, der ein Laminat ist von:
einer Titanoxid (TiO₂)-Schicht oder einer Tantalpentoxid (Ta₂O₅)-Schicht und
einer Siliziumoxid (SiO₂)-Schicht oder einer Magnesiumfluorid (MgF₂)-Schicht.

9. Interferenzfilter (5) nach Anspruch 8, wobei:
der erste reflektierende Film (56) einen ersten Schutzfilm (563) aufweist, der auf dem ersten Legierungsfilm (562) gegenüber dem ersten dielektrischen Film (561) vorgesehen ist,
der zweite reflektierende Film (57) einen zweiten Schutzfilm (573) aufweist, der auf dem zweiten Legierungsfilm (572) gegenüber dem zweiten dielektrischen Film (571) vorgesehen ist, und
jeder von dem ersten und dem zweiten Schutzfilm (563, 573) Siliziumoxid (SiO₂), Siliziumoxynitrid (SiON), Siliziumnitrid (SiN) oder Aluminiumoxid enthält.

10. Optisches Modul, umfassend:
einen Interferenzfilter (5) nach einem vorstehenden Anspruch und
einen Detektor (31), der eine Menge des von dem Interferenzfilter (5) ausgewählten Lichts erfasst.

11. Analysevorrichtung, umfassend:
ein optisches Modul nach Anspruch 10 und
einen Prozessor, der ein photometrisches Verfahren basierend auf der Menge des von dem Detektor (31) erfassten Lichts durchführt.

## Revendications

1. Filtre interférentiel (5) comprenant :
un premier film réfléchissant (56), et
un second film réfléchissant (57) disposé pour faire face au premier film réfléchissant (56) avec un espacement (G) entre eux;
**caractérisé en ce que** :
les premier et second films réfléchissants (56, 57) incluent respectivement des premier et second films d'alliage, chacun d'eux étant un film d'alliage d'Ag-Sm-Cu ou un film d'alliage d'Ag-Bi-Nd ; et
les premier et second films d'alliage ont une épaisseur de 30 à 80 nm.

2. Filtre interférentiel (5) selon la revendication 1, dans lequel le film d'alliage d'Ag-Sm-Cu a une teneur en Sm de 0,1 à 0,5 % atomique et une teneur en Cu de 0,1 à 0,5 % atomique, et le film d'alliage d'Ag-Bi-Nd a une teneur en Bi de 0,1 à 3 % atomique et une teneur en Nd de 0,1 à 5 % atomique.

3. Filtre interférentiel (5) selon la revendication 1, dans lequel le premier film d'alliage est un premier film d'alliage d'Ag-Sm-Cu, et le second film d'alliage est un second film d'alliage d'Ag-Sm-Cu.

4. Filtre interférentiel (5) selon la revendication 3, dans lequel chacun des premier et second films d'alliage d'Ag-Sm-Cu a une teneur en Sm de 0,1 à 0,5 % atomique et une teneur en Cu de 0,1 à 0,5 % atomique.

5. Filtre interférentiel (5) selon la revendication 1, dans lequel le premier film d'alliage est un premier film d'alliage d'Ag-Bi-Nd, et le second film d'alliage est un second film d'alliage d'Ag-Bi-Nd.

6. Filtre interférentiel (5) selon la revendication 5, dans lequel chacun des premier et second films d'alliage d'Ag-Bi-Nd a une teneur en Bi de 0,1 à 3 % atomique et une teneur en Nd de 0,1 à 5 % atomique.

7. Filtre interférentiel (5) selon l'une quelconque des revendications précédentes, dans lequel les premier et second films réfléchissants (56, 57) sont des films monocouche respectivement formés des premier et second films d'alliage.

8. Filtre interférentiel (5) selon l'une quelconque des revendications 1 à 6, comprenant en outre :
un premier substrat (51) supportant le premier film réfléchissant (56), et
un second substrat (52) supportant le second film réfléchissant (57) ;
dans lequel le premier film réfléchissant (56) inclut un premier film diélectrique (561) prévu entre le premier film d'alliage (562) et le premier substrat (51), et le second film réfléchissant (57) inclut un second film diélectrique (571) prévu entre le second film d'alliage (572) et le second substrat (52), chacun des premier et second films diélectriques (561, 571) étant l'un :
d'un film monocouche d'oxyde de titane (TiO₂), et
d'un film à plusieurs couches qui est un stratifié :
d'une couche d'oxyde de titane (TiO₂) ou de pentoxyde de tantale (Ta₂O₅), et
d'une couche d'oxyde de silicium (SiO₂) ou de fluorure de magnésium (MgF₂).

9. Filtre interférentiel (5) selon la revendication 8, dans lequel :
le premier film réfléchissant (56) inclut un premier film protecteur (563) prévu sur le premier film d'alliage (562) opposé au premier film diélectrique (561),
le second film réfléchissant (57) inclut un second film protecteur (573) prévu sur le second film d'alliage (572) opposé au second film diélectrique (571), et
chacun des premier et second films protecteurs (563, 573) contient de l'oxyde de silicium (SiO₂), de l'oxynitrure de silicium (SiON), du nitrure de silicium (SiN) ou de l'alumine.

10. Module optique comprenant :
un filtre interférentiel (5) selon l'une quelconque des revendications précédentes, et
un détecteur (31) qui détecte une quantité de lumière sélectionnée par le filtre interférentiel (5).

11. Dispositif d'analyse comprenant :
un module optique selon la revendication 10, et
un processeur qui effectue un processus photométrique basé sur la quantité de lumière détectée par le détecteur (31).
